# EUROPÄISCHE PATENTSCHRIFT

(11) **EP 2 397 388 B1**
(45) Veröffentlichungstag und Bekanntmachung des Hinweises auf die Patenterteilung: **25.11.2015**
(21) Anmeldenummer: 11169940.1
(22) Anmeldetag: 15.06.2011
(51) Int. Cl.: B62B 3/02

(54) **Zusammenlegbarer Transportkarren**
Collapsible transport cart
Chariot de manutention repliable

(30) Priorität: 15.06.2010 CN 201020226061 U
(43) Veröffentlichungstag der Anmeldung: 21.12.2011
(73) Patentinhaber: Zhejiang Hengfeng Top Leisure Co., Ltd., Wukang, Huzhou Zhejiang 313200 (CN)
(72) Erfinder: Yang, Baoqing, Zhejiang 313200 (CN)
(74) Vertreter: Vièl, Christof

(56) Entgegenhaltungen:
- FR-A- 1 053 010
- US-A- 1 649 203
- US-B1- 6 491 318

## Beschreibung

Die vorliegende Erfindung betrifft einen zusammenlegbaren Transportkarren gemäß dem Oberbegriff von Anspruch 1, bestehend aus einem Rahmen, der im entfalteten Zustand einen rechteckigen Aufbewahrungshohlraum aufspannt, einer Zugstange mit Griffstück und vier Rädern, welche an der Unterseite des Rahmens angebracht sind.

Transportkarren sind weitverbreitete Beförderungsmittel, die wegen ihrer geringen Größe besonders auf Marktplätzen von Vorteil sind. An Markttagen können große Fahrzeuge, wie Lastkraftwagen, den Marktverkaufsstand nicht beliefern, da die Verkaufsstände dicht an dicht stehen und auch die gegenüberliegenden Stände in geringer Entfernung, oftmals nur ein Durchgang für Marktplatzbesucher, aufgestellt sind. Daher ist es von Vorteil wenn diese Lasten mittels kleinerer Transportmittel transportiert werden können. Auch beim Einkaufen von Lebensmitteln oder anderen großen und/oder schweren Anschaffungen erfreuen sich kleinere Transportkarren, besonders bei älteren Menschen oder bei längeren Fußwegen, mehr und mehr der Beliebtheit.

Allerdings sind die meisten Transportkarren, welche für den Transport von Gütern auf Marktplätzen eingesetzt werden, nicht zusammenlegbar. Dies führt dazu, dass die Lager- und Verkaufsfläche auf dem zumeist sowieso beengten Marktplatz, durch die Transportkarren zusätzlich eingeschränkt wird. Die Anzahl der mitgebrachten Transportkarren kann jedoch nicht verringert werden, da Nachschub von Waren aus den abseits geparkten Lieferwagen gewährleistet sein muss und zudem die Verkäufer gerne den Service anbieten, größere oder schwerere Gegenstände, wie z.B. Schränke, Stoffbahnen, Computer oder Ähnliches, zu dem Fahrzeug des Kunden zu transportieren.

Aus der CN 2900281 Y ist ein zusammenlegbarer Lastenkarren bekannt, der einen Rahmen, ein Rad und einen Handgriff aufweist. Nachteilig bei diesem Lastenkarren ist insbesondere, dass der Rahmen in Bodennähe angeordnet ist und der Lastenkarren im zusammengelegten Zustand schwer zu tragen ist.

Aus der US 1 649 203 A1 ist ein zusammenlegbarer Lastenkarren gemäß dem Oberbegriff von Anspruch 1 bekannt, der aus einem zusammenfaltbaren Rahmen besteht, wobei an diesem Rahmen ein flexibler Beutel an den oberen Ecken des Rahmens und eine flexible Trägerplatte an den unteren Ecken befestigt ist.

Die US 6 491 318 B1 offenbart einen zusammenlegbaren Transportkarren, bestehend aus einem Rahmen, der im entfalteten Zustand einen rechteckigen Aufbewahrungshohlraum aufspannt, einer Zugstange mit Griffstück und vier Rädern, welche an der Unterseite des Rahmens angebracht sind, wobei der Rahmen vier obere Befestigungselemente und vier untere Befestigungselemente aufweist, die jeweils mit mindestens vier Gelenkbefestigungsvorrichtungen zur Befestigung eines Rahmengestänges ausgestattet sind und wobei der Rahmen an den Längsseiten zwei Gelenkmechanismen, die über zwei mittige Gelenkstücke miteinander verbunden sind, aufweist.

Der Erfindung liegt daher die Aufgabe zugrunde, einen Lastenkarren zu schaffen, der schnell auf ein kleines Maß zusammen- oder auseinander faltbar und gleichzeitig einfach zu befördern ist, wodurch das Problem der herkömmlichen nicht zusammenlegbaren und schwer tragbaren Schub- und Transportkarren gelöst wird.

Diese Aufgabe wird erfindungsgemäß bei einem Transportkarren gemäß dem Oberbegriff dadurch gelöst, dass der an den Längsseiten befindliche Gelenkmechanismus im geöffneten Zustand aus einem horizontalen oberen Stützstab, welcher über ein oberes Befestigungselement mit einem vertikalen Stützstab und einem Seitenstab verbunden ist, sowie aus einem weiteren Stützstab und einem kurzen Trägerstab, der neben dem mittigen Gelenkstück an dem oberen Stab angebracht ist, besteht, wobei der Seitenstab und der weitere Stützstab im geöffneten Zustand des Transportkarrens eine x-förmige Anordnung bilden.

Dadurch, dass jeder vertikale Stützstab mit einem Gelenkmechanismus verbunden ist, wird der Rahmen gestützt. Diese Anordnung steigert die Belastbarkeit des Transportkarrens und erleichtert dessen Manövrierbarkeit.

Dadurch, dass der Rahmen des Transportkarrens ohne die dazugehörige Bespannung zusammenlegbar ist, kann die Vorrichtung platzsparend in Bus, Bahn oder Auto verstaut werden. Durch die Ausgestaltung des Transportkarrens ist es möglich, diesen mit wenigen Handgriffen und auf einfache Weise zusammenzulegen. Sehr vorteilhaft hierbei ist, dass durch Anheben eines zentralen Befestigungselementes senkrecht zur Transversalebene und gleichzeitiges Herunterdrücken der mittigen Gelenkstücke, die zwischen den oberen Stäben angebracht sind, der Transportkarren zusammenlegbar ist und durch Herunterdrücken des zentralen Befestigungselementes und nach außen bzw. unten Drücken der oberen Befestigungselemente der Transportkarren entfaltbar ist.

Das einfache Zusammenlegen und Entfalten des Transportkarrens wird durch die Rahmeneigenschaften des Transportkarrens ermöglicht. Für den Rahmen ist vorgesehen, dass er jeweils an einer Vorderseite und Rückseite ein x-förmiges Rahmengestänge aufweist, wobei an der Vorderseite zwei zusammenschiebbare Stäbe und an dem x-förmigen Rahmengestänge ein Befestigungsmittel für die Zugstange, die als ausziehbare Zugstange ausgestaltet ist, angebracht sind, und an den Ecken des Rahmens vertikale Stützstäbe angebracht sind, die an dem unteren Ende an Befestigungselementen und am oberen Ende an oberen Befestigungselementen befestigt sind, und auf jeder der Längsseiten zwei Gelenkmechanismen angebracht sind, die über zwei Gelenkstücke miteinander verbunden sind, sowie vier Bodenstangen, die sowohl an Befestigungselementen als auch an einem zentralen Befestigungselement gelenkig verbunden sind, aufweist.

Es ist weiterhin vorgesehen, dass die an der Seite befindlichen Gelenkmechanismen und die Gelenkstücke fixierbar sind, insbesondere mittels eines Riegels. Im geöffneten Zustand haben die Gelenkmechanismen, die mit einem Riegel oder einer anderen Fixiervorrichtung festgestellt sind, somit auch eine stabilisierende und unterstützende Wirkung.

Es ist vorgesehen, dass die auf jeweils einer Längsseite angeordneten vertikalen Stützstäbe über zwei Gelenkmechanismen miteinander verbunden sind, wobei in entfaltetem Zustand des Transportkarrens die zwei oberen Stäbe in einer Ebene durch das Gelenkstück verbunden sind und die zwei Seitenstäbe, die ebenfalls über das Gelenkstück verbunden sind, eine v-förmige Anordnung bilden.

Eine weitere wichtige Ausgestaltung für das Zusammenlegen und Entfalten des Transportkarrens sieht vor, dass die vertikalen Stützstäbe ausziehbar sind und obere Befestigungselemente und untere Befestigungselemente aufweisen, wobei die oberen Befestigungselemente an einer oberen und schmalen Stelle und die unteren Befestigungselemente an einer unteren breiteren Stelle an den vertikalen Stützstäben angebracht sind, wobei durch die nach oben verlaufende Verjüngung das Zusammenschieben der vertikalen Stützstäbe ermöglicht wird.

Durch die nach oben verlaufende Verjüngung wird der Zusammenschub ermöglicht. Zugleich wird ermöglicht, dass die Räder während des Zusammenlegens immer den Boden berühren, obwohl sich die Verbindungen der Seitenstäbe und der vertikalen Stützstäbe mit der Bewegung der Stützstäbe nach oben verschieben.

Es ist vorteilhaft, dass die Zugstange, die aus mehreren Abschnitten besteht, ausziehbar ist und mit einem Handgriff versehen ist, über ein Gelenk mit zwei zusammenschiebbaren Stäben, welche selbst an einer Vorderseite an den unteren Befestigungselementen befestigt sind, verbunden ist und an einem Befestigungsmittel, das an dem x-förmigen Rahmengestänge angebracht ist, fixierbar ist.

Die teleskopische Zugstange ermöglicht, dass im zusammengelegten Zustand die Zugstange auf die gleiche Länge wie der gefaltete Transportkarren zusammengeschoben werden kann, wodurch die Verletzungsgefahr durch Hängenbleiben an dem Handgriff, beispielsweise auf vielbesuchten Märkten oder in Bussen, vermieden wird.

Zum Wenden des Transportkarrens auf engem Raum ist es zweckmäßig, dass die Räder unter den vertikalen Stützstäben angebracht sind, an einer Hinterseite in Fahrstellung arretiert gelagert sind und an einer Vorderseite frei beweglich sind.

Im Rahmen der Erfindung ist auch vorgesehen, dass der Aufbewahrungshohlraum mit einer Bespannung gebildet wird und rechteckig ist, wobei die vier Ecken der Bespannung an den oberen Befestigungselementen der vertikalen Stützstäbe befestigt sind, die Oberkanten um die oberen Stützstäbe gewickelt sind sowie die Seitenränder Rohrmuffen aufweisen, die um die vertikalen Stützstäbe befestigbar sind.

Der rechteckige Aufbewahrungshohlraum ermöglicht ein größtmögliches Innenvolumen des Transportkarrens. Durch diese Art der Bespannung wird zudem ermöglicht, dass die Bespannung einfach von dem Transportkarren gelöst, beziehungsweise einfach an diesem befestigt werden kann. Durch die Befestigung über die Rohrmuffen und die Befestigung an den oberen Stützstäben wird ein rechteckiger Aufbewahrungshohlraum ermöglicht. Zudem stabilisiert die Bespannung den Rahmen des Transportkarrens in geöffneter Position, sodass dieser sich nicht zusammenfaltet. Weiterhin ist der Transportbeutel oben offen, da der beispielsweise aus Stoff bestehende Aufbewahrungshohlraum an dem Rahmen des Transportkarrens anbringbar ist, was wiederum das Befüllen mit Waren während des Einkaufs erleichtert.

Damit der Transportkarren einfach mit einem rechteckigen Aufbewahrungshohlraum ausgestattet werden kann, ist es vorteilhaft, dass die Bespannung aus biegsamen Material, insbesondere Tuchstoff oder Plane, besteht. Durch ein biegsames Material kann erreicht werden, dass die Bespannung platzsparend zusammengefaltet und verstaut werden kann, falls diese nicht benötigt wird. Zudem ist das Eigengewicht beispielsweise von Tuchstoff gering. Daher kann man die Bespannung einfach, beispielsweise in einer Tüte, transportieren. Natürlich könnte man aber auch ein starres Behältnis, wie eine Wanne, Trog oder dergleichen, in dem Transportkarren platzieren, wenn man einen stabilen Aufbewahrungshohlraum benötigt.

Es ist schließlich vorgesehen, dass der Transportkarren leicht ist, da dies das einfache Transportieren und/oder Verstauen in einem Verkehrsmittel ermöglicht. Daher besteht eine weitere Ausgestaltung der Erfindung darin, dass die vertikalen Stützstäbe, die oberen Stützstäbe, die Zugstange, die zusammenschiebbaren Stäbe, die oberen Stäbe, die Seitenstäbe, die Stützstäbe sowie die Bodenstangen kreisförmigen und/oder eckigem Querschnitts sind. Wenn das Rahmengestänge beispielsweise eine Ausnehmung oder Ausbohrung entlang der Längsachse aufweist und somit zumindest teilweise hohl ist, kann Material eingespart und somit Gewicht reduziert werden. Der kreisförmige Querschnitt ist weiterhin vorteilhaft, da keine Kanten, an welchen man sich verletzen kann, vorhanden sind.

Im Folgenden wird die Erfindung anhand von Ausführungsbeispielen erläutert.

Es zeigen:
- Fig. 1: die perspektivische Ansicht eines zusammenlegbaren Transportkarrens mit befestigbarer Bespannung,
- Fig. 2: die perspektivische Ansicht des Rahmens eines erfindungsgemäßen zusammenlegbaren Transportkarrens,
- Fig. 3: die perspektivische Ansicht des Rahmenfaltmechanismus des erfindungsgemäßen zusammenlegbaren Transportkarrens,
- Fig. 4: die perspektivische Ansicht eines zusammengefalteten erfindungsgemäßen zusammenlegbaren Transportkarrens.

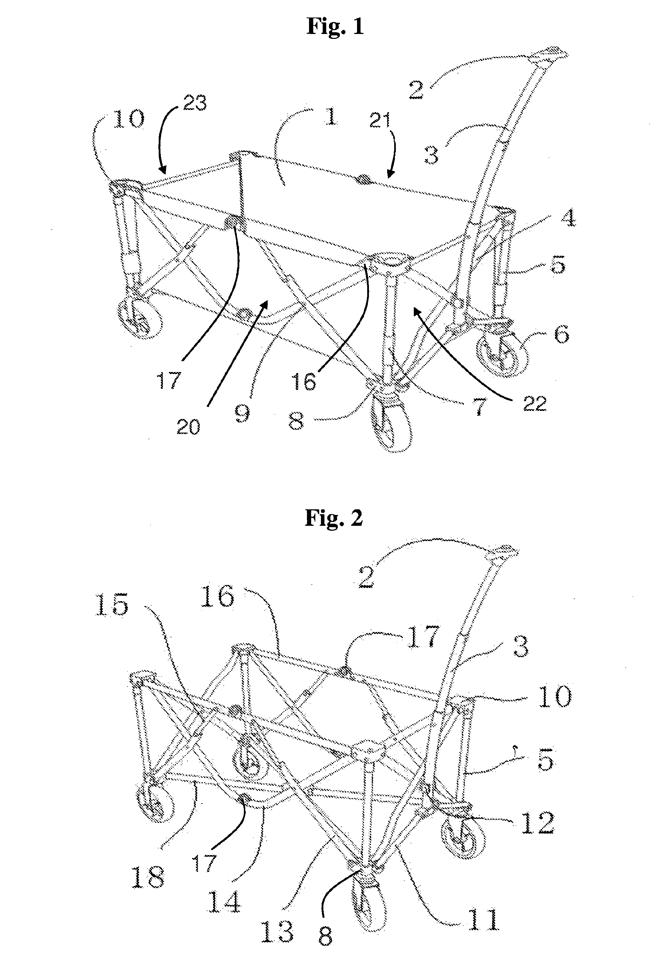

Wie aus der perspektivischen Ansicht in Fig. 1 hervorgeht, ist der zusammenlegbare Transportkarren mit einem rechteckförmigen Transportbeutel (1) ausgekleidet, welcher an den oberen Stützstäben (16), sowie über befestigbare Rohrmuffen (7) und durch Befestigungen an dem oberen Befestigungselementen (10) fixierbar ist. Durch eine ausziehbare Zugstange (3), an der ein Griffstück (2) angebracht ist, die über ein Befestigungsmittel (12) an dem x-förmigen Rahmengestänge (4) der Vorderseite (22) befestigbar ist, wird der Transportkarren, welcher mit vier Rädern (6) ausgestattet ist, gezogen und manövriert. Die Räder (6), welche unter den vertikalen Stützstäben (5) angebracht sind, können beispielsweise an der Rückseite (23) richtungsfixiert sein und an der Vorderseite (22) Räder (6) aufweisen, die frei beweglich sind und somit in jede Richtung drehbar sind. Der Rahmen des Transportkarrens ist durch Gelenkstücke (17), über die die oberen Stützstäbe (16) verbunden sind, von faltbarer Struktur. Zudem wird die Faltung durch die vertikalen Stützstäbe (5) erleichtert, da diese zusammenschiebbar sind.

In Fig. 2 ist der Rahmen eines geöffneten Transportkarrens dargestellt. Es ist ersichtlich, dass im geöffneten Zustand an der Vorderseite (22) und der Rückseite (23) des Transportkarrens die an den Seiten angebrachten oberen Stützstäbe (16), welche an den Längsseitenmitten über Gelenkstücke (17) miteinander verbunden sind, in einer Ebene angeordnet sind und über obere Befestigungselemente (10) mit den vertikalen Stützstäben (5) gelenkig verbunden sind. Das x-förmige Rahmengestänge (4) ist über diese Gelenkvorrichtungen ebenfalls mit zwei oberen Befestigungselementen (10), zwei unteren Befestigungselementen (8) sowie zwei der vertikalen Stützstäbe (5) verbunden. Die oberen Befestigungselemente (10) weisen zudem noch Befestigungsmöglichkeiten für die Seitenstäbe (14), die entlang der Längsseiten (20, 21) des Transportkarrens angebracht sind, auf, wobei zwei Seitenstäbe (14) über ein Gelenkstück (17) verbunden sind. Zwischen den Seitenstäben (14) und den unteren Befestigungselementen (8) sind Stützstäbe (13) befestigt. Die Seitenstäbe (14) und die Stützstäbe (13) sind über ein Gelenk miteinander verbunden und bilden im geöffneten Zustand des Transportkarrens eine x-förmige Anordnung. Die zwei Stützstäbe (13) an den Längsseiten (20, 21) des Transportkarrens sind jeweils mit einem kurzen Trägerstab (15), der mit einer Befestigung rechts oder links neben den mittigen Gelenkstücken (17) an den oberen Stäben (16) angebracht ist, über beispielsweise ein einfaches Gelenk verbunden und bilden gemeinsam im geöffneten Zustand des Transportkarrens in etwa eine Gerade. Zusammen bilden jeweils ein Stützstab (13), ein Seitenstab (14), ein horizontaler oberer Stützstab (16) und ein kurzer Trägerstab (15) einen Gelenkmechanismus (9). Im geöffneten Zustand sind die vier unteren Befestigungselemente (8) über vier Bodenstangen (18), die in der Mitte über ein zentrales Befestigungselement (19) verbunden sind, auf einer horizontalen Ebene angeordnet. Die aus mehreren Abschnitten bestehende und ausziehbare Zugstange (3) ist mit einem Griffstück (2) versehen und kann an der Vorderseite (22) des Transportkarrens an einem Befestigungsmittel (12) und über ein Gelenk mit zwei zusammenschiebbaren Stäben (11), welche selbst an der Vorderseite (22) an den unteren Befestigungselementen (8) befestigt sind, verbunden werden.

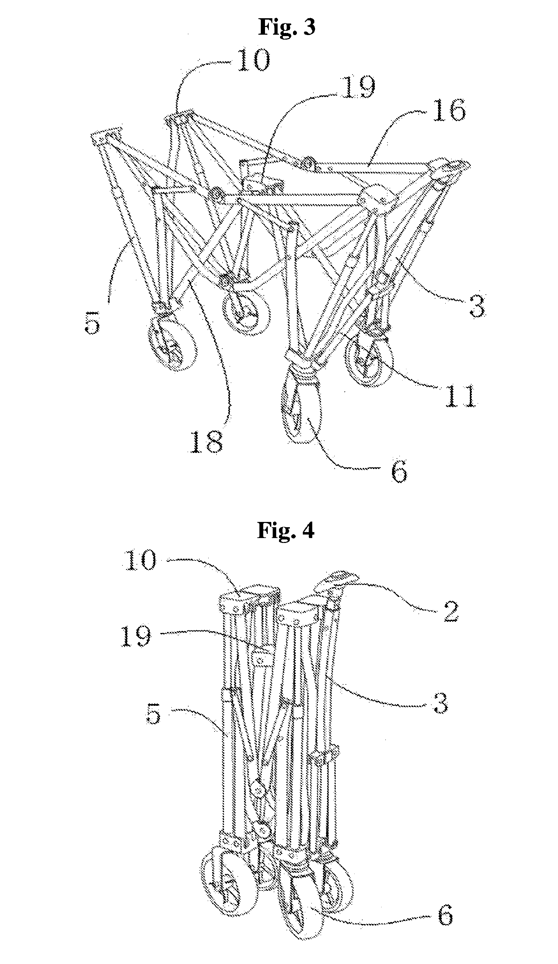

Wie aus der perspektivischen Ansicht in Figur 3 und Figur 4 hervorgeht, kann der Transportkarren zusammengelegt werden. Hierfür wird die ausziehbare Zugstange (3) von dem Befestigungsmittel (12) an dem x-förmigen Rahmengestänge (4) an der Vorderseite (22) gelöst und daraufhin das zentrale Befestigungselement (19) angehoben. Gleichzeitig werden die mittigen Gelenkstücke (17) an den oberen Stäben (16) nach unten gedrückt. Durch diese Bewegungsabfolge werden die (in geöffneter Form) senkrechten vertikalen Stützstäbe (5) nach schräg außen geschoben. Gleichzeitig klappen die zwei Seitenstäbe (14) an den Längsseiten (20, 21), die in der Mitte über ein Gelenkstück (17) verbunden sind, zusammen, wodurch die Stützstäbe (13), die über ein einfaches Gelenk mit den kurzen Trägerstäben (15) verbunden sind, gefaltet werden. Durch weiteres Anheben des zentralen Befestigungselements (19) faltet sich der Transportkarren zusammen, sodass sich zum Schluss die vier im geöffneten Zustand senkrechten vertikalen Stützstäbe (5) im geschlossenen Zustand ebenfalls in einer senkrechten Anordnung befinden, jedoch nun direkt neben dem zentralen Befestigungselement (19). Die ausziehbare Zugstange (3) kann durch Druck auf das Griffstück (2) zusammengeschoben werden und danach erneut über das Befestigungsmittel (12) an dem x-förmigen Rahmengestänge (4) der Vorderseite (22) fixiert werden.

## Patentansprüche

1. Zusammenlegbarer Transportkarren, bestehend aus einem Rahmen, der im entfalteten Zustand einen rechteckigen Aufbewahrungshohlraum (1) aufspannt, einer Zugstange (3) mit Griffstück (2) und vier Rädern (6), welche an der Unterseite des Rahmens angebracht sind, wobei der Rahmen vier obere Befestigungselemente (10) und vier untere Befestigungselemente (8) aufweist, die jeweils mit mindestens vier Gelenkbefestigungsvorrichtungen zur Befestigung eines Rahmengestänges ausgestattet sind und dass der Rahmen an den Längsseiten (20, 21) zwei Gelenkmechanismen (9), die über zwei mittige Gelenkstücke (17) miteinander verbunden sind, aufweist,
**dadurch gekennzeichnet, dass** der an den Längsseiten (20, 21) befindliche Gelenkmechanismus (9) im geöffneten Zustand aus einem horizontalen oberen Stützstab (16), welcher über ein oberes Befestigungselement (10) mit einem vertikalen Stützstab (5) und einem Seitenstab (14) verbunden ist, sowie einen weiteren Stützstab (13) und einen kurzen Trägerstab (15), der neben dem mittigen Gelenkstück (17) an dem oberen Stab (16) angebracht ist, aufweist, wobei der Seitenstab (14) und der weitere Stützstab (13) im geöffneten Zustand des Transportkarrens eine x-förmige Anordnung bilden.

2. Zusammenlegbarer Transportkarren nach Anspruch 1,
**dadurch gekennzeichnet, dass** durch Anheben eines zentralen Befestigungselementes (19) senkrecht zur Transversalebene und gleichzeitiges Herunterdrücken der mittigen Gelenkstücke (17), die zwischen den oberen Stäben (16) angebracht sind, der Transportkarren zusammenlegbar ist und durch Herunterdrücken des zentralen Befestigungselementes (19) und nach außen/unten Drücken der oberen Befestigungselemente (10) der Transportkarren entfaltbar ist.

3. Zusammenlegbarer Transportkarren nach Anspruch 1,
**dadurch gekennzeichnet, dass** der Rahmen an einer Vorderseite (22) und einer Rückseite (23) ein x-förmiges Rahmengestänge (4) aufweist, wobei an der Vorderseite (22) zusätzlich zwei zusammenschiebbare Stäbe (11) und an dem x-förmige Rahmengestänge (4) ein Befestigungsmittel (12) für die Zugstange (3), wobei die Zugstange (3) ausziehbar ist, angebracht sind, und an den Ecken des Rahmens die vertikalen Stützstäbe (5) angebracht sind, die an dem unteren Ende an den unteren Befestigungselementen (8) und am oberen Ende an den oberen Befestigungselementen (10) befestigt sind, und auf jeder der Längsseiten (20, 21) die zwei Gelenkmechanismen (9) angebracht sind, die über die zwei Gelenkstücke (17) miteinander verbunden sind, sowie vier Bodenstangen (18), die sowohl an den unteren Befestigungselementen (8) als auch an einem zentralen Befestigungselement (19) gelenkig verbunden sind, aufweist.

4. Zusammenlegbarer Transportkarren nach Anspruch 1,
**dadurch gekennzeichnet, dass** die an den Längsseiten befindlichen Gelenkmechanismen (9) und die mittigen Gelenkstücke (17) fixierbar sind, insbesondere mittels eines Riegels.

5. Zusammenlegbarer Transportkarren nach Anspruch 1,
**dadurch gekennzeichnet, dass** die auf jeweils einer Längsseite (20, 21) angeordneten vertikalen Stützstäbe (5) über zwei Gelenkmechanismen (9) verbunden sind, wobei in entfaltetem Zustand des Transportkarrens die zwei oberen Stäbe (16) in einer Ebene angeordnet und durch das mittige Gelenkstück (17) verbunden sind und die zwei Seitenstäbe (14), die ebenfalls über das mittige Gelenkstück (17) verbunden sind, eine v-förmige Anordnung bilden.

6. Zusammenlegbarer Transportkarren nach Anspruch 1,
**dadurch gekennzeichnet,** das die vertikalen Stützstäbe (5) ausziehbar sind und die oberen Befestigungselemente (10) und die unteren Befestigungselemente (8) aufweisen, wobei die oberen Befestigungselemente (10) an einer oberen und schmaleren Stelle und die unteren Befestigungselemente (8) an einer unteren und breiteren Stelle an den vertikalen Stützstäben (5) angebracht sind, wobei durch die nach oben verlaufende Verjüngung das Zusammenschieben der vertikalen Stützstäbe (5) ermöglicht wird.

7. Zusammenlegbarer Transportkarren nach Anspruch 1,
**dadurch gekennzeichnet, dass** die Zugstange (3), die aus mehreren Abschnitten besteht, ausziehbar ist und mit einem Handgriff (2) versehen ist, über ein Gelenk mit zwei zusammenschiebbaren Stäben (11), welche selbst an einer Vorderseite (22) an den unteren Befestigungselementen (8) befestigt sind, verbunden ist und an einem Befestigungsmittel (12), das an dem x-förmigen Rahmengestänge (4) angebracht ist, fixierbar ist.

8. Zusammenlegbarer Transportkarren nach Anspruch 1,
**dadurch gekennzeichnet, dass** die Räder (6) unter den vertikalen Stützstäben (5) angebracht sind, an einer Hinterseite (23) in Fahrstellung arretiert gelagert sind und an einer Vorderseite (22) frei beweglich sind.

9. Zusammenlegbarer Transportkarren nach Anspruch 1,
**dadurch gekennzeichnet, dass** der Aufbewahrungshohlraum (1) durch eine Bespannung gebildet wird und rechteckig ist, wobei die vier Ecken der Bespannung an den oberen Befestigungselementen (10) der vertikalen Stützstäbe (5) befestigt sind, die Oberkanten um die oberen Stützstäbe (16) gewickelt sind sowie die Seitenränder Rohrmuffen (7) aufweisen, die um die vertikalen Stützstäbe (5) befestigbar sind.

10. Zusammenlegbarer Transportkarren nach Anspruch 9,
**dadurch gekennzeichnet, dass** die Bespannung aus biegsamen Material, insbesondere Tuchstoff oder Plane, besteht.

11. Zusammenlegbarer Transportkarren nach Anspruch 3,
**dadurch gekennzeichnet, dass** die vertikalen Stützstäbe (5), die oberen Stützstäbe (16), die Zugstange (3), die zusammenschiebbaren Stäbe (11), die Seitenstäbe (14), die weiteren Stützstäbe (13) sowie die Bodenstangen (18) kreisförmigen und/oder eckigem Querschnitts sind.

## Claims

1. A collapsible transport cart consisting of a frame that defines a rectangular stowage space (1) when the cart is in the open configuration, a pull rod (3) with a handle (2) and four wheels (6) attached to the bottom of the frame, said frame having four upper securing elements (10) and four lower securing elements (8), each of which is provided with at least four movably jointed fastening devices for securing a frame structure, and said frame having, on each of its long sides (20, 21), two movably jointed mechanisms (9) hinged together via two central joints (17),
**characterised in that,** in the open configuration, the movably jointed mechanism (9) on each of the long sides (20, 21) consists of a horizontal upper support rod (16) connected via an upper securing element (10) to a vertical support rod (5) and a side rod (14), and features an additional support rod (13) and a short bearing rod (15), which is fastened to the upper rod (16) beside the central joint (17), the side rod (14) and the additional support rod (13) forming an X-shaped arrangement when the transport cart is in the open configuration.

2. A collapsible transport cart according to claim 1,
**characterised in that** the transport cart can be collapsed by raising a central securing element (19) at right angles to the transverse plane and simultaneously pressing down the central joints (17) between the upper rods (16) and can be unfolded by pressing down the central securing element (19) and pressing the upper securing elements (10) outwards/downwards.

3. A collapsible transport cart according to claim 1,
**characterised in that** the frame has, at a front end (22) and a rear end (23), an X-shaped frame structure (4), said front end (22) having, in addition, two telescoping rods (11) attached thereto and the X-shaped frame structure (4) having a fastening means (12) for the pull rod (3), which is of telescoping design, the vertical support rods (5), which are attached at the bottom to the lower securing elements (8) and at the top to the upper securing elements (10), being fixed to the corners of the frame, and each of the long sides (20, 21) having, mounted thereon, the two movably jointed mechanisms (9) hinged together at the two joints 17, and has four bottom rods (18), which are movably jointed with the lower securing elements (8) and with a central securing element (19).

4. A collapsible transport cart according to claim 1,
**characterised in that** the movably jointed mechanisms (9) located on the long sides and the central joints (17) are lockable, in particular by means of a locking bar.

5. A collapsible transport cart according to claim 1,
**characterised in that** the vertical support rods (5) disposed on each of the long sides (20, 21) are interconnected via two movably jointed mechanisms (9), the two upper rods (16), which are connected by the central joint (17), lying in one plane when the transport cart is in the unfolded configuration and the two side rods (14), which are also connected via the central joint (17), forming a V-shaped arrangement.

6. A collapsible transport cart according to claim 1,
**characterised in that** the vertical support rods (5) are telescopic and feature the upper securing elements (10) and the lower securing elements (8), said upper securing elements (10) being mounted at an upper and thinner position on the vertical support rods (5) and said lower securing elements (8) being mounted on a lower and broader position thereon, the upward taper enabling the vertical support rods (5) to be telescoped together.

7. A collapsible transport cart according to claim 1,
**characterised in that** the pull rod (3), which consists of a plurality of segments, is extensible and is provided with a handle (2), is connected via a movable joint with two telescoping rods (11), which themselves are fastened to the lower securing elements (8) at a front end (22), and is attachable to a fastening means (12) mounted on the X-shaped frame structure (4).

8. A collapsible transport cart according to claim 1,
**characterised in that** the wheels (6) are mounted beneath the vertical support rods (5), are supported at a rear end (23) such as to be locked in travelling position and, at a front end (22), are freely movable.

9. A collapsible transport cart according to claim 1,
**characterised in that** the stowage space (1) is formed by a covering and is rectangular, the four corners of the covering being attached to the upper securing elements (10) mounted on the vertical support rods (5), the upper edges of the covering being wrapped around the upper support rods (16) and the side edges having sleeves (7), which can be secured to the vertical support rods (5).

10. A collapsible transport cart according to claim 9,
**characterised in that** the covering is made of flexible material, in particular cloth or canvas.

11. A collapsible transport cart according to claim 3,
**characterised in that** the vertical support rods (5), the upper support rods (16), the pull rod (3), the telescoping rods (11), the side rods (14), the additional support rods (13) and the bottom rods (18) have a circular and/or angular cross section.

## Revendications

1. Chariot de transport repliable, se composant d'un cadre qui à l'état déplié définit un espace de rangement rectangulaire (1), d'une barre de traction (3) avec un élément de poignée (2) et de quatre roues (6) qui sont placées sur la face inférieure du cadre, le cadre présentant quatre éléments de fixation supérieurs (10) et quatre éléments de fixation inférieurs (8) qui sont équipés chacun d'au moins quatre dispositifs de fixation articulée pour la fixation d'un dispositif de tringles de cadre, et en ce que le cadre, sur les côtés longitudinaux (20, 21) est muni de deux mécanismes articulés (9) qui sont reliés ensemble à l'aide de deux pièces d'articulation centrales (17),
**caractérisé en ce que** le mécanisme articulé (9) situé sur les côtés longitudinaux (20, 21), à l'état déplié, présente une tige support horizontale supérieure (16) qui est reliée par le biais d'un élément de fixation (10) à une tige support verticale (5) et une tige latérale (14), ainsi qu'une tige support supplémentaire (13) et une tige porteuse courte (15) qui est fixée sur la tige supérieure (16) à côté de la pièce d'articulation centrale (17), la tige latérale (14) et la tige support supplémentaire (13), à l'état déplié du chariot de transport, formant un ensemble en forme de X.

2. Chariot de transport repliable selon la revendication 1,
**caractérisé en ce que** le chariot de transport peut être replié en soulevant un élément de fixation central (19) perpendiculairement au plan transversal et en appuyant simultanément vers le bas les pièces d'articulation centrales (17) qui sont placées entre les barres supérieures (16), et le chariot de transport peut être déplié en appuyant vers le bas l'élément de fixation central (19) et en appuyant vers l'extérieur/le bas les éléments de fixation supérieurs (10).

3. Chariot de transport repliable selon la revendication 1,
**caractérisé en ce que** le cadre présente sur un côté avant (22) et un côté arrière (23) un dispositif de tringle en forme de X (4), deux barres (11) télescopiques étant placées en plus sur le côté avant (22) et un élément de fixation (12) pour la tige de traction (3) étant placé sur le dispositif de tringle en forme de X (4), la barre de traction (3) étant télescopique, et les barres d'appui verticales (5) étant placées aux angles du cadre, lesquelles barres étant fixées par leur extrémité inférieure aux éléments de fixation inférieurs (8) et par leur extrémité supérieure aux éléments de fixation supérieurs (10), et les deux mécanismes articulés (9) étant disposés sur chacun des côtés latéraux (20, 21), lesquels mécanismes sont reliés ensemble par le biais des deux pièces d'articulation (17), et présente également quatre barres de sol (18) qui sont reliés de façon articulée aussi bien aux éléments de fixations inférieurs (8) qu'à un élément de fixation (19) central (19).

4. Chariot de transport repliable selon la revendication 1,
**caractérisé en ce que** les mécanismes articulés (9) et les pièces d'articulation centrales (17) peuvent être bloqués, notamment au moyen d'un taquet.

5. Chariot de transport repliable selon la revendication 1,
**caractérisé en ce que** les tiges d'appui verticales (5) disposées sur un même côté latéral sont reliées par le biais de deux mécanismes articulés (9), les deux barres supérieures (16) étant disposées, à l'état déplié du chariot de transport, dans un plan et étant reliées par la pièce d'articulation centrale (17) et les barres latérales (14), qui sont elles aussi reliées par le biais de la pièce d'articulation centrale (17), formant un arrangement en forme de V.

6. Chariot de transport repliable selon la revendication 1,
**caractérisé en ce que** les barres d'appui verticales (5) sont télescopiques et présentent les éléments de fixation supérieurs (10) et les éléments de fixation inférieurs (8), les éléments de fixation supérieurs (10) étant placés sur les barres d'appui verticales (5) à un emplacement supérieur et plus étroit et les éléments de fixation inférieurs (8) à un emplacement inférieur plus large, le coulissement des barres d'appui verticales (5) étant rendu possible par le rétrécissement en direction du haut.

7. Chariot de transport repliable selon la revendication 1,
**caractérisé en ce que** la barre de traction (3), qui est composée de plusieurs sections, est télescopique et munie d'une poignée (2), elle est reliée par le biais d'une articulation à deux barres télescopiques (11) qui sont elles-mêmes fixées sur le côté avant (22) aux éléments de fixation inférieurs (8), et elle peut être fixée à un élément de fixation (12) qui est placé sur le dispositif de tringle en forme de X (4).

8. Chariot de transport repliable selon la revendication 1,
**caractérisé en ce que** les roues (6) sont placées sous les barres d'appui verticales (5), sont logées bloquées en position d'avancement d'un côté arrière (23) et librement mobiles d'un côté avant (22).

9. Chariot de transport repliable selon la revendication 1,
**caractérisé en ce que** l'espace de rangement (1) est formé par un entoilage et il est rectangulaire, les quatre coins de l'entoilage étant fixés aux éléments de fixation supérieurs (10) des barres d'appui verticales (5), les bords supérieurs étant enroulés autour barres d'appui supérieures (16), et les bords latéraux présentent des manchons tubulaires (7) qui peuvent être fixés autour des barres d'appui verticales (5).

10. Chariot de transport repliable selon la revendication 9,
**caractérisé en ce que** l'entoilage est composé d'un matériau souple, notamment une étoffe ou une bâche.

11. Chariot de transport repliable selon la revendication 3,
**caractérisé en ce que** les barres d'appui verticales (5), les barres d'appui supérieures (16), la barre de traction (3), les barres télescopiques (11), les barres latérales (14), les barres d'appui supplémentaires (13) ainsi que les barres de sol (18) ont une section transversale circulaire et/ou de forme carrée.
